# EUROPEAN PATENT SPECIFICATION

(11) **EP 4 525 359 B1**
(45) Date of publication and mention of the grant of the patent: **29.04.2026**
(21) Application number: 23196875.1
(22) Date of filing: 12.09.2023
(51) Int. Cl.: H04L 9/40, H04W 8/20, H04W 12/02, H04W 12/04, H04W 12/06, H04W 12/30

(54) **METHOD FOR TRANSFERRING ESIM PROFILE DATA**
VERFAHREN ZUR ÜBERTRAGUNG VON ESIM-PROFILDATEN
PROCÉDÉ DE TRANSFERT DE DONNÉES DE PROFIL ESIM

(43) Date of publication of application: 19.03.2025
(73) Proprietor: NXP B.V., 5656 AG Eindhoven (NL)
(72) Inventor: Nitsch, Nils Frederik, 5656 AG Eindhoven (NL)
(74) Representative: Krott, Michel

(56) References cited:
- EP-B1- 2 815 553
- US-A1- 2017 280 328

## Description

### TECHNICAL FIELD

The present disclosure relates to a method of transferring eSIM profile data. Furthermore, the present disclosure relates to a wireless communication unit for performing the proposed method. Furthermore, the present disclosure relates to a system for performing the proposed method.

### BACKGROUND

The current security protocol defined by the GSM Association (GSMA) for downloading and installing eSIM profiles is defined in a "one-way-street" principle. That means, once an eSIM profile is delivered (which is encrypted for a single eUICC (embedded universal integrated circuit card) only), the requirement is that the eUICC never ever will expose any data from that profile unless needed and defined by the relevant telecommunication specifications (e.g. ETSI, 3GPP, etc.). With that comes the drawback that today's scenario of removing a plastic SIM card from one device and put it into another device, and by that keeping all modifications done on the SIM so far, is not possible in the eSIM ecosystem. On plastic SIM cards confidential and/or secret data owned by the subscriber (e.g. data privacy related data) or its' business partner (IDs and secret keys) were never readable outside the plastic SIM card/secure element.

According to the format and security of an eSIM profile defined by the GSMA, the owning mobile network operator (MNO) of that profile would be able to decrypt the exported profile within its server (e.g. "SM-DP+" (Subscription Manager Data Preparation System) as per GSMA SGP.22) as there is only one layer of encryption/security defined today. By this profile decryption the MNO could also extract other confidential and/or secret data from the subscriber or one of its business partners as above. JavaCard Applets can be located within the MNO profiles (either loaded during profile download or post issuance) but after initial applet download they are in a non-personalized state. The personalization (IDs, keys, user data) can then happen between the subscriber and its business partner with limited or without any involvement of the MNO. Exporting a profile after such personalization steps into an MNO profile storage server (e.g. SM-DP+ acc. to GSMA SGP.22) without any add. security layer would make it possible for the MNO to decrypt and read that personalized data.

Also an export to another eUICC/eSE without any further protection of confidential user data is only protected by the security protocol defined by GSMA. No additional user knowledge is required to retrieve this confidential user data from the exported profile during import into the new eUICC.

Conventional eUICCs do not have resources to store the encrypted profile entirely before decryption and processing. Therefore, the profile data is sent to and decrypted/processed by the eUICC in segments in a kind of a "streaming" mode. Also, an export would be an "export-stream" where the eUICC assembles, encrypts and sends the exported profile in segments.

US 10 061 942 B2 discloses secure storage of an electronic subscriber identity module on a wireless communication device. US 2017/280328 A1 discloses an embedded universal integrated circuit card for use in communication device, that has processing circuitry for utilizing symmetric key to decrypt electronic subscriber identity module and installing electronic subscriber identity module on card. EP 2 815 553 B1 discloses distributing electronic access control clients to mobile wireless devices.

### SUMMARY

It is an object of the present invention to provide an improved method for the transfer of eSIM profile data.

According to a first aspect, the present disclosure proposes Method for transferring eSIM profile data from a first wireless communication device having a first eUICC device to a second wireless communication device having a second eUICC device, comprising the steps:
a. providing encrypted eSIM profile data together with encrypted confidential user data on the first eUICC device, the encrypted eSIM profile data having been encrypted by means of profile encryption keys, wherein the encrypted confidential user data has been encrypted at least partially by means of a user key;
b. transferring the encrypted eSIM profile data together with the encrypted confidential user data from the first eUICC device to the second eUICC device; and
c. decrypting and installing the encrypted eSIM profile data on the second wireless communication device, wherein the confidential user data are decrypted and installed on the second wireless communication device (D2) at least partially by means of the user key.

In this way, when preparing and performing the eSIM profile data export, a specific user key or user secret is used, which represents a kind of confidential individual key. Resulting therefrom, confidential user data that does not concern other persons can be efficiently protected. Hence, advantageously, the usage of the confidential user data is solely at the discretion of the user.

According to a further aspect, the present disclosure proposes a wireless communication device for performing the proposed method.

According to a further aspect, the present disclosure proposes a system comprising a first and a second wireless communication device.

In one or more embodiments, the user key is a password.

In one or more embodiments, the user key is combined with public key material data in order to generate the encryption key for the confidential user data.

According to one or more embodiments, wherein, when the eSIM profile data has been received on the second wireless communication device, an input of the user key is requested in order to decrypt the encrypted personalized data by means of the personalized key. This can be done, e.g. by prompting to input the user key.

According to one or more embodiments, wherein, when the eSIM profile data has been received by the second wireless communication device and a user does not want the confidential user data on the second wireless communication device, the confidential user data are deleted from the second wireless communication device. In this way, if the user doesn't want to have/to use the confidential user data at all, such that they will simply be deleted, which corresponds to a kind of reprovisioning of said data. Hence, only parts of the imported eSIM profile is used.

According to one or more embodiments, the eSIM profile data is additionally stored on a server.

According to one or more embodiments, the key creation material and the profile encryption keys are generated ephemeral.

According to one or more embodiments, at least a single eSIM profile is transferred from the first wireless communication device to the second wireless communication device.

According to one or more embodiments, in step a. the encrypted eSIM profile data has additionally or alternatively been MAC-protected.

### BRIEF DESCRIPTION OF DRAWINGS

The above discussion/summary is not intended to describe each embodiment or every implementation of the present disclosure. The drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. However, needless to say, that the disclosure is not limited to the examples of embodiments.

All illustrations in the drawings are schematical. It is noted that in different figures, similar or identical elements or features are provided with the same reference signs or with reference signs that are different from the corresponding reference signs only within the first digit. In order to avoid unnecessary repetitions, elements or features which have already been elucidated with respect to a previously described embodiment are not elucidated again at a later position of the description.

Various example embodiments may be more completely understood in consideration of the following detailed description in connection with the accompanying drawings, in which:
- FIGs 1, 2: show a conventional transfer of eSIM profile data;
- FIG. 3: shows a first part of a sequence diagram of the proposed method;
- FIG. 4: is a diagram showing an embodiment of a result of the proposed method;
- FIG. 5: shows a second part of a sequence diagram of the proposed method;
- FIG. 6: is a flow diagram showing a proposed method; and
- FIG. 7: is a block diagram of a proposed system.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

### DESCRIPTION OF EMBODIMENTS

In order to prevent an MNO or a different user from reading confidential/secret data not owned by the MNO or a different user, but being part of an exported profile, e.g. data about the subscriber or one of its business partners, an additional encryption and/or integrity layer is applied to such confidential data. The present disclosure proposes steps to first mark the special data object by the owning application (e.g. JavaCard applet) and 2^{nd} encrypt/MAC those data objects with key material derived from an input of the user, e.g. PIN or password, called "user secret" (personalized encryption key).

The exported eSIM profile data will then contain additional data that user data with additional protection is stored within the exported eSIM profile and, if needed, additional data used by the key derivation function, but the user's input will not be part of the exported eSIM profile and only known to the respective user.

Within the process of re-importing the eSIM profile to a new device/eUICC the user will be prompted to enter his previously assigned "user secret". With this "user secret" and the key derivation optional key derivation data from the exported eSIM profile, the eUICC in the new device can also decrypt and restore the confidential/secret personalized data.

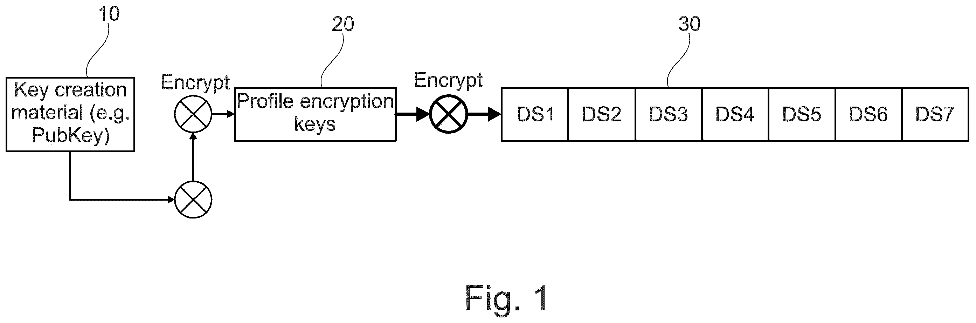

FIG. 1 shows in principle that in a conventional process eSIM profile data 30 are "forward encrypted" in a way relying e.g. on known ephemeral key pair (ECC) based Diffi-Hellman key derivation. Firstly, ECC creation takes place on a server (not shown) and a target eUICC (not shown). Then, an exchange of key creation material 10 (e.g. Public key) takes place between the server and the target eUICC. A creation of symmetric key material based on Diffi-Hellman shared secret creation plus key derivation on server and eUICC. An entire "bound profile package" (BPP) with eSIM profile data 30 with segments DS1...DS7 is then sent to a target eUICC device, wherein the key creation material 10 and the profile encryption keys 20 are sent along, but encrypted with the key material 10 created in the previous steps described. Due to the technical restrictions of the underlying transport protocol towards the eUICC device and limited resources of an eUICC device, the bound profile package with the eSIM profile data PD is sent to the eUICC device in segments DS1...DS7 and decrypted and processed/installed in segments DS1...DSn and not as a single big block of data.

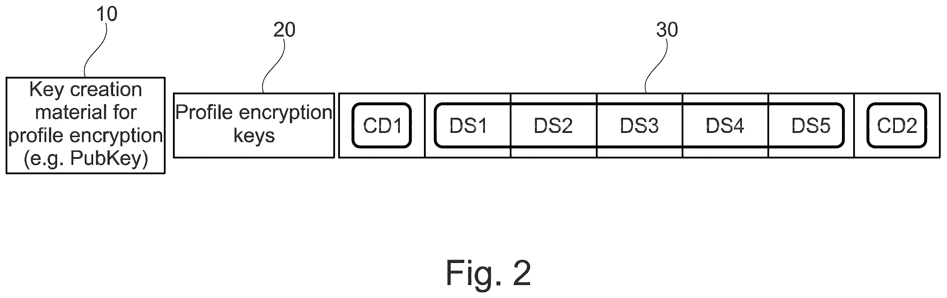

FIG. 2 illustrates, that without any additional security layer, data owned by the subscriber or one of its business partners, so called confidential user data CD1, CD2 and allocated as data objects by applications (e.g. JavaCard Applets) on the eUICC device, would be part of the exported eSIM profile data 30 and readable by the MNO as he can derive the respective key material as described above with reference to FIG. 1.

As illustrated in FIG. 1 and FIG. 2 so called "forward encryption only" is performed, designed for partial transferring, decryption and processing in a streaming-mode.

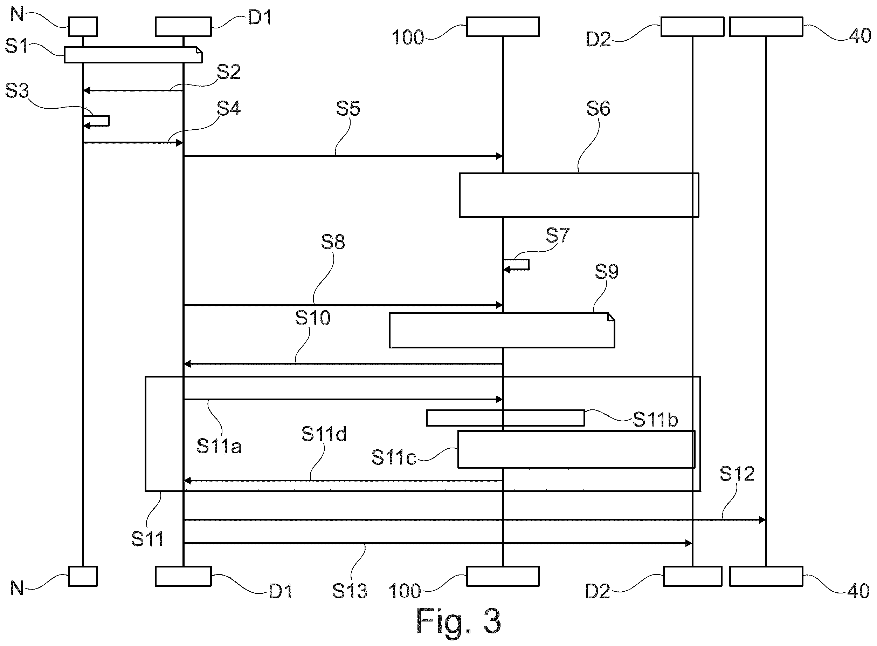

FIG. 3 shows in principle a first sequence diagram of the proposed method of transferring eSIM profile data 30 containing confidential user data CD1...CDn. The process flow for the profile export with the confidential user data CD1...CDn works as follows:
In a step S1 the device change/profile export procedure is started on an "old" or first wireless communication device D1 (e.g. smartphone, watch, automotive device, IoT-device, etc.), either by a user N, by the first device D1 or some other means.

In a step S2 the user N is prompted to enter a user key UK ("user secret") for securing his eSIM profile data 30 (e.g. PIN, password entry or some method to create entropy), which, in steps S3, S4 is entered by the user N and securely stored.

In a step S5, along with all other data provided to the exporting first eUICC device 100 (secure element, eSE) being arranged on the first wireless communication device D1 in order to export a certain eSIM profile, the user key UK is sent along and not exposed to any other entity than to the exporting first eUICC device 100.

The eUICC/eSE device 100 will then perform an appropriate key derivation function to create key material for encryption and/or MAC creation. A MAC (Message Authentication Code) is a kind of checksum to ensure that the data has not been tampered with. In contrast to a HASH, which also detects/prevents manipulation, a MAC uses a secret key (analogous to the actual encryption of data). Receiver and sender must know this MAC key, just like the encryption key, beforehand. In the course of the GSMA standards, the MAC key for the profile is generated analogously to the encryption key using the described ECC-DiffiHellman and KeyDerivation. The profile packet is also not only encrypted in GSMA standards, but also MAC protected. Hereinafter, the mentioned MAC creation is always an and/or option, even if the text only talks about "encryption".

In an optional step S6, in a case that objects are not marked by their nature as confidential user data CD1...CDn, the first eUICC device 100 triggers applications to mark confidential data.

Along with public known key material data 10 (e.g. identifiers, constant strings, counters, etc.) in a step S7 the user key UK is used in the key derivation function to create one or more confidential keys 10a for the purpose of encrypting and/or MAC creation of the confidential user data CD1...CDn. In this context, the generated key (or the keys if MAC is also included) must remain secret and can only be regenerated by the mentioned key derivation (secret key + public known key material).

The eUICC device 100 either already knows about special confidential user data objects CD1...Cdn (e.g. by using certain JavaCard API classes) or the eUICC/eSE triggers each applet via defined API to inform that the applet is about to be exported. Applets can then decide if to erase data or if to mark data objects as confidential.

A sub-variant of the method could be that such confidential user data CD1...CDn is not necessarily encrypted by may be only protected against manipulation (e.g. apply MAC).

After all applets have been triggered, the first eUICC device 100 starts exporting the entire eSIM profile data 30 including the encrypted confidential user data objects CD1...CDn. The public known key material data 10 will be part of the exported eSIM profile data 30 before any confidential data object.

In this context, the difference between two "public" key data is emphasized. A first time according to the proven GSMA principle for the eSIM profile (ECC-Diffi-Hellman + Key Derivation), a second time only for the user data, with an unspecified key derivation algorithm.

ECC-DiffiHellman is an algorithm that works with two public/private key pairs. One on the sender side, one on the receiver side. The two sides exchange the PublicKey and use it as input for the Diffi-Hellman algorithm together with their own privateKey. Due to the underlying mathematics, the same result comes out on both sides (the so-called "shared secret"), which no one else can calculate without having the private keys and without that secret data being exchanged.

This "shared secret" is then, together with "public key material data", used as input for the so-called "key derivation algorithm" (e.g. a HASH like SHA-256 or SHA3) and the result there (again on both sides) are then real encryption and/or MAC keys.

In the present disclosure, the "User Key" could already be the "Shared Secret" and the Key Derivation function the same as with the GSMA, but it doesn't have to be. Hence, the public key material data for user data protection 10a is not a Public Key but "other public" data used in the "Key Derivation" algorithm along with the User Key.

In case the first eUICC device 100 encounters a data object marked as confidential it will secure it with the key material derived in a step S7.

In a step S8 the first data segment DS1 is sent from the first wireless communication device D1 to the profile exporting first eUICC device 100.

In a step S9 profile export information is prepared together with the first encrypted data segment which is then sent to the first wireless communication device D1 in a step S10.

In a loop-like process S11, in a step S11a the next data segment DS2 is sent from the first wireless communication device D1 to the first eUICC device 100. In a step S11b the next encrypted data segment is prepared. In an optional step S11c, in a case, that confidential user data CD1...CDn is detected, it will secured at least partially by means of the user key UK. In a step S11d the encrypted data segment is sent from the first eUICC device 100 to the first wireless communication device D1.

In an optional step S12 the exported eSIM profile data 30 is stored in a profile storage device 40 (e.g. a server).

Finally, in a step S13 the eSIM profile data 30 is transferred from the first wireless communication device D1 to the second wireless communication device D2 (e.g. smartphone, automotive device, automotive device, IoT-device, etc.).

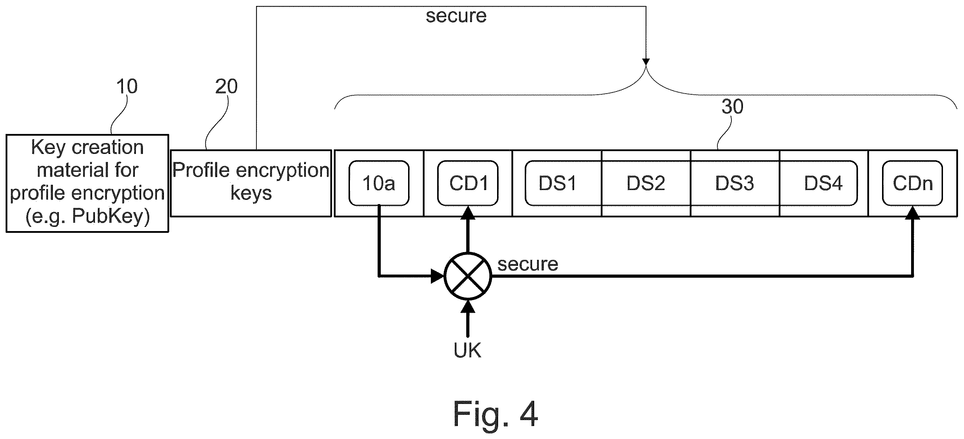

As a result of the illustrated process, having added an additional security layer and information about it will result in exported eSIM profile data 30 as shown in FIG. 4. One recognizes, that public key material data 10a is used together with the user key UK to encrypt the confidential user data CD1...CDn according to step S11c as illustrated above with reference to FIG. 3.

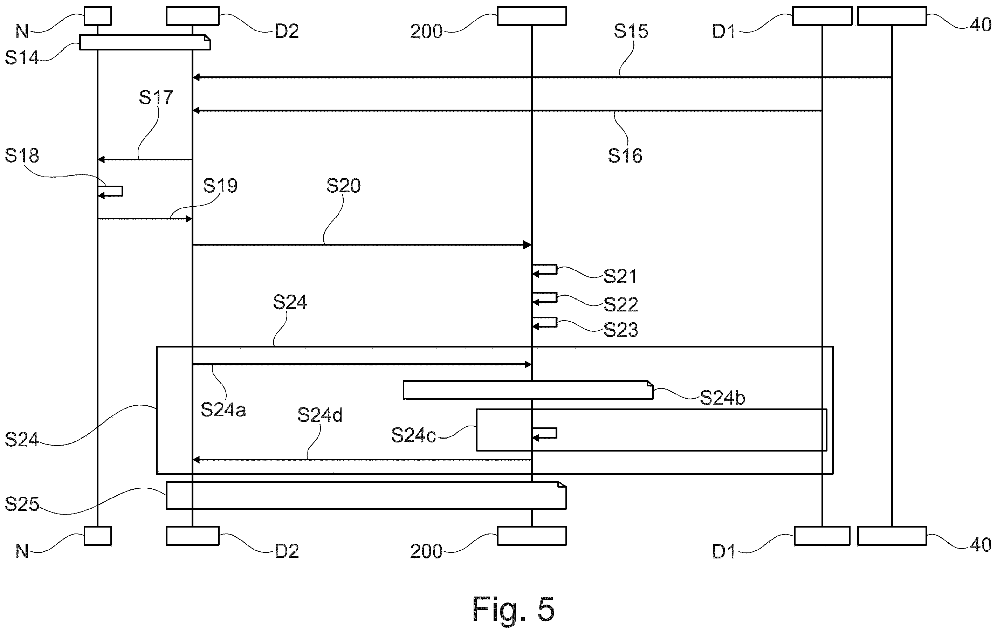

FIG. 5 shows in principle a sequence diagram with an import of the exported eSIM profile data PD into the second wireless communication device D2 having a second eUICC device 200 with the following steps. Re-importing the previously exported eSIM profile data 30 and decryption of the confidential data objects CD1...CDn will happen similar to the export as illustrated above with reference to FIG. 3.

Device change/profile import procedure is started in a step S14 on the second wireless communication device D2, either by the user N, by the first wireless communication device D1 or some other means.

In an optional step S15 the eSIM profile data 30 is downloaded from the server 40, alternatively, in a step S16, the eSIM profile data 30 is downloaded from the first wireless communication device D1.

In a step S17 the user N is prompted to enter the user key UK entered previously on the first wireless communication device D1, whereupon, in a step S 18, the user key UK is entered and securely stored. In this context, along with all other data provided to the importing eUICC device 200 or secure element (eSE), respectively, in order to import a certain profile, the user key UK is sent in steps S19, S20 along and not exposed to any other entity (within the device or outside the device) than to the second wireless communication eUICC device 200.

In steps S21, S22 and S23 the second wireless communication eUICC device 200 prepares profile import, decrypts a first profile segment of the "normal" eSIM profile data 30 (without the user confidential data CD1...CDn) as per standard. Furthermore, the second wireless communication eUICC device 200 will use same appropriate key derivation function to create the same key material 10a for verification and decryption.

Along public know key material data (e.g. identifiers, constant string s, counters,...) the user key UK is used in the key derivation function.

A loop-like process S24 is performed until the whole eSIM profile data 30 is exported. In this context, in steps S24a, S24b data segments are sent from the second wireless communication device D2 to the second eUICC device 200 and the next encrypted data segment is decrypted and processed. In a step 24c, in case, the second eUICC device 200 encounters a data object marked as confidential it will verify its authenticity and decrypt it with the key material derived before in step S23 before storing it along with all other data objects. Step S24c acknowledges that the process S24 is completed and the complete eSIM profile 30 has successfully been exported.

In a step S25 the eSIM profile data 30 has successfully been imported into the second wireless communication device D2 and is now ready for activation.

Once the re-imported eSIM profile data 30 gets activated, the confidential data objects CD1...CDn can be used by the corresponding applications as before on the first wireless communication device D1.

As a consequence, protection of the confidential user data CD 1... CDn is supported in a way that said data is not made available for any other person or device than the authorized user N.

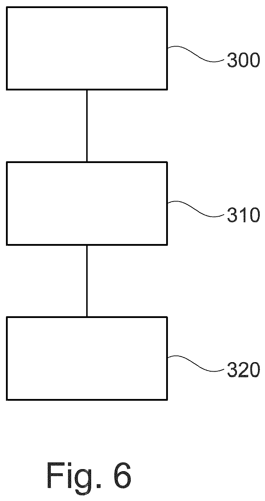

FIG. 6 shows a flow of an embodiment of the proposed method for transferring eSIM profile data 30 from a first wireless communication device D1 having a first eUICC device 100 to a second wireless communication device D2 having a second eUICC device 200.

In a step 300 encrypted eSIM profile data 30 is provided together with encrypted confidential user data CD1...CDn on the first eUICC device 100, the encrypted eSIM profile data 30 having been encrypted by means of profile encryption keys 20, wherein the encrypted confidential user data CD1...CDn has been encrypted at least partially by means of a user key UK.

In a step 310 the encrypted eSIM profile data 30 is transferred together with the encrypted confidential user data CD1...CDn from the first eUICC device 100 to the second eUICC device 200.

In a step 320 the encrypted eSIM profile data 30 is decrypted and installed on the second wireless communication device D2, wherein the confidential user data CD1... CDn are decrypted and installed on the second wireless communication device D2 at least partially by means of the user key UK.

Alternatively, after reception of the eSIM profile data 30, the user N can decide not to accept the confidential user data CD1...CDn, wherein the confidential user data CD1...Cdn is deleted from the second wireless communication device D2.

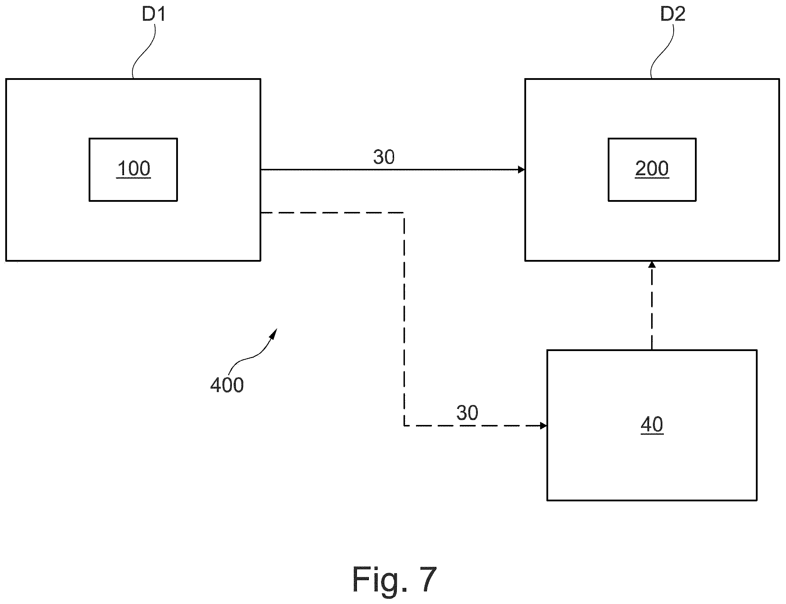

FIG. 7 shows a block diagram of a system with a first wireless communication device D1 and a second wireless communication device D2, wherein eSIM profile data 30 is transferred in the above illustrated way. A proposed wireless communication unit D1, D2 is configured to perform the proposed method. A proposed system comprises at least two proposed wireless communication units D1, D2 which are configured to perform the proposed method. A proposed eUICC device 100, 200 implemented at least partially as a hardware. One recognizes that optionally the eSIM profile data 30 can also be transferred to a server 40, from which the eSIM profile data 30 can be transferred to the second wireless communication device D2.

Summarizing, the present disclosure proposes an export of eSIM profile data 30 from a current eUICC device to a server and/or via peer-to-peer to another eUICC device.

Aspects of the present disclosure are believed to be applicable to a variety of different types of apparatuses, systems and methods involving radar systems and related communications. In certain implementations, aspects of the present disclosure have been shown to be beneficial when used in the context of automotive radar in environments susceptible to the presence of multiple objects within a relatively small region. While not necessarily so limited, various aspects may be appreciated through the following discussion of nonlimiting examples which use exemplary contexts.

Advantageously, in addition to a transfer of different data, for example apps, email etc. also eSIM profile data can be transferred between different entities in the above illustrated way.

In the foregoing description various specific details have been set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

As examples, the specification describes and/or illustrates aspects useful for implementing the claimed disclosure by way of various circuits or circuitry which may be illustrated as or using terms such as blocks, modules, device, system, unit, controller, etc. and/or other circuit-type depictions. Such circuits or circuitry are used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU, in one example the logic circuitry may carry out a process or method (sometimes "algorithm") by performing such activities and/or steps associated with the above-discussed functionalities. In other examples, the logic circuitry may carry out a process or method by performing these same activities/operations.

For example, in certain of the above-discussed embodiments, one or more modules are discrete logic circuits or programmable logic circuits configured and arranged for implementing these operations/activities. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described above is used by the programmable circuit to perform the related steps, functions, operations, activities, etc. Depending on the application, the instructions (and/or configuration data) can be configured for implementation in logic circuitry, with the instructions (whether characterized in the form of object code, firmware or software) stored in and accessible from a memory (circuit). As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also elements described in association with different embodiments may be combined. It should also be noted, that reference signs in the claims should not be construed as limiting the scope of the claims.

The discloses devices, apparatuses, units, elements, systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

It is noted that the embodiments above have been described with reference to different subject-matters. In particular, some embodiments may have been described with reference to method-type claims whereas other embodiments may have been described with reference to apparatus-type claims.

However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

It has to be noted that embodiments have been described with reference to different subject matters. In particular, some embodiments have been described with reference to method type claims whereas other embodiments have been described with reference to apparatus type claims.

However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

### Reference signs:

- 10: key creation material for profile data protection
- 10a: public key material data for user data protection
- 20: profile encryption keys
- 30: eSIM profile data
- 40: server
- 100: 1^{st} eUICC device
- 200: 2^{nd} eUICC device
- 300...320: method steps
- 400: system
- D1: 1st wireless communication device
- D2: 2^{nd} wireless communication device
- SD1...SDn: data segments
- CD1...Cdn: confidential user data
- UK: user key
- S1...S25: method steps

## Claims

1. Method for transferring eSIM profile data (30) from a first wireless communication device (D1) having a first eUICC device (100) to a second wireless communication device (D2) having a second eUICC device (200), comprising the steps:
a. providing encrypted eSIM profile data (30) together with encrypted confidential user data (CD1...CDn) on the first eUICC device (100), the encrypted eSIM profile data (30) having been encrypted by means of profile encryption keys (20), wherein the encrypted confidential user data (CD1...CDn) has been encrypted at least partially by means of a user key (UK);
b. transferring the encrypted eSIM profile data (30) together with the encrypted confidential user data (CD1...CDn) from the first eUICC device (100) to the second eUICC device (200); and
c. decrypting and installing the encrypted eSIM profile data (30) on the second wireless communication device (D2), wherein the confidential user data (CD1...CDn) are decrypted and installed on the second wireless communication device (D2) at least partially by means of the user key (UK).

2. Method according to claim 1, wherein the user key (UK) is a password.

3. Method according to claim 1 or 2, wherein the user key (UK) is combined with public key material data (10a) in order to generate the encryption key for the confidential user data (CD1...CDn).

4. Method according to any of the preceding claims, wherein, when the eSIM profile data (30) has been received on the second wireless communication device (D2), an input of the user key (UK) is requested in order to decrypt the encrypted personalized data by means of the personalized key.

5. Method according to claim 4, wherein, when the eSIM profile data (30) has been received by the second wireless communication device (D2) and a user (N) does not want the confidential user data (CD1...CDn) on the second wireless communication device (D2), the confidential user data (CD1...CDn) are deleted from the second wireless communication device (D2).

6. Method according to any of the preceding claims, wherein the eSIM profiled data (30) is additionally stored on a server (40).

7. Method according to claim 4 or 5, wherein the key creation material (10) and the profile encryption keys (20) are generated emphemeral.

8. Method according to any of the preceding claims, wherein at least a single eSIM profile (30) is transferred from the first wireless communication device (D1) to the second wireless communication device (D2).

9. Method according to any of the preceding claims, wherein in step a. the encrypted eSIM profile data (30) has additionally been MAC-protected.

10. Method according to any of claims 1 to 8, wherein in step a. the encrypted eSIM profile data (30) has alternatively been MAC-protected.

11. Wireless communication device (D1, D2) being configured to perform the method according to any of the preceding claims.

12. System (400) comprising a first wireless communication device (D1) and a second wireless communication device (D2) according to claim 11.

## Patentansprüche

1. Verfahren zur Übertragung von eSIM-Profildaten (30) von einer ersten Drahtloskommunikationsvorrichtung (D1), die eine erste eUICC-Vorrichtung (100) aufweist, an eine zweite Drahtloskommunikationsvorrichtung (D2), die eine zweite eUICC-Vorrichtung (200) aufweist, umfassend die folgenden Schritte:
a. Bereitstellen von verschlüsselten eSIM-Profildaten (30) zusammen mit verschlüsselten vertraulichen Benutzerdaten (CD1...CDn) auf der ersten eUICC-Vorrichtung (100), wobei die verschlüsselten eSIM-Profildaten (30) mittels Profilverschlüsselungsschlüsseln (20) verschlüsselt wurden, wobei die verschlüsselten vertraulichen Benutzerdaten (CD1...CDn) zumindest teilweise mittels eines Benutzerschlüssels (UK) verschlüsselt wurden;
b. Übertragen der verschlüsselten eSIM-Profildaten (30) zusammen mit den verschlüsselten vertraulichen Benutzerdaten (CD1...CDn) von der ersten eUICC-Vorrichtung (100) an die zweite eUICC-Vorrichtung (200); und
c. Entschlüsseln und Installieren der verschlüsselten eSIM-Profildaten (30) auf der zweiten Drahtloskommunikationsvorrichtung (D2), wobei die vertraulichen Benutzerdaten (CD1...CDn) zumindest teilweise mittels des Benutzerschlüssels (UK) entschlüsselt und auf der zweiten Drahtloskommunikationsvorrichtung (D2) installiert werden.

2. Verfahren nach Anspruch 1, wobei der Benutzerschlüssel (UK) ein Kennwort ist.

3. Verfahren nach Anspruch 1 oder 2, wobei der Benutzerschlüssel (UK) mit Daten öffentlichen Schlüsselmaterials (10a) kombiniert wird, um den Verschlüsselungsschlüssel für die vertraulichen Benutzerdaten (CD1...CDn) zu erzeugen.

4. Verfahren nach einem der vorhergehenden Ansprüche, wobei, wenn die eSIM-Profildaten (30) von der zweiten Drahtloskommunikationsvorrichtung (D2) empfangen wurden, eine Eingabe des Benutzerschlüssels (UK) angefordert wird, um die verschlüsselten personalisierten Daten mittels des personalisierten Schlüssels zu entschlüsseln.

5. Verfahren nach Anspruch 4, wobei, wenn die eSIM-Profildaten (30) von der zweiten Drahtloskommunikationsvorrichtung (D2) empfangen wurden und ein Benutzer (N) die vertraulichen Benutzerdaten (CD1...CDn) auf der zweiten Drahtloskommunikationsvorrichtung (D2) nicht wünscht, die vertraulichen Benutzerdaten (CD1...CDn) von der zweiten Drahtloskommunikationsvorrichtung (D2) gelöscht werden.

6. Verfahren nach einem der vorhergehenden Ansprüche, wobei die eSIM-Profildaten (30) zusätzlich auf einem Server (40) gespeichert werden.

7. Verfahren nach Anspruch 4 oder 5, wobei das Schlüsselerstellungsmaterial (10) und die Profilverschlüsselungsschlüssel (20) vorübergehend erzeugt werden.

8. Verfahren nach einem der vorhergehenden Ansprüche, wobei mindestens ein einzelnes eSIM-Profil (30) von der ersten Drahtloskommunikationsvorrichtung (D1) an die zweite Drahtloskommunikationsvorrichtung (D2) übertragen wird.

9. Verfahren nach einem der vorhergehenden Ansprüche, wobei in Schritt a. die verschlüsselten eSIM-Profildaten (30) zusätzlich MAC-geschützt wurden.

10. Verfahren nach einem der Ansprüche 1 bis 8, wobei in Schritt a. die verschlüsselten eSIM-Profildaten (30) alternativ MAC-geschützt wurden.

11. Drahtloskommunikationsvorrichtung (D1, D2), die dazu ausgelegt ist, das Verfahren nach einem der vorhergehenden Ansprüche durchzuführen.

12. System (400), umfassend eine erste Drahtloskommunikationsvorrichtung (D1) und eine zweite Drahtloskommunikationsvorrichtung (D2) nach Anspruch 11.

## Revendications

1. Procédé de transfert de données (30) de profil eSIM d'un premier dispositif (D1) de communication sans fil ayant un premier dispositif eUICC (100) vers un second dispositif (D2) de communication sans fil ayant un second dispositif eUICC (200), comprenant les étapes de :
a. fourniture de données chiffrées (30) de profil eSIM conjointement avec des données d'utilisateur confidentielles chiffrées (CD1...CDn) sur le premier dispositif eUICC (100), les données chiffrées (30) de profil eSIM ayant été chiffrées au moyen de clés (20) de chiffrement de profil, les données d'utilisateur confidentielles chiffrées (CD1...CDn) ayant été chiffrées au moins partiellement au moyen d'une clé d'utilisateur (UK) ;
b. transfert des données chiffrées (30) de profil eSIM conjointement avec les données d'utilisateur confidentielles chiffrées (CD1...CDn) du premier dispositif eUICC (100) au second dispositif eUICC (200) ; et
c. déchiffrement et installation des données chiffrées (30) de profil eSIM sur le second dispositif (D2) de communication sans fil, les données d'utilisateur confidentielles (CD1...CDn) étant déchiffrées et installées sur le second dispositif (D2) de communication sans fil au moins partiellement au moyen de la clé d'utilisateur (UK).

2. Procédé selon la revendication 1, la clé d'utilisateur (UK) étant un mot de passe.

3. Procédé selon la revendication 1 ou 2, la clé d'utilisateur (UK) étant combinée avec des données de matériau de clé publique (10a) afin de générer la clé de chiffrement pour les données d'utilisateur confidentielles (CD1...CDn).

4. Procédé selon l'une quelconque des revendications précédentes, dans lequel, lorsque les données (30) de profil eSIM ont été reçues sur le second dispositif (D2) de communication sans fil, une saisie de la clé d'utilisateur (UK) est demandée pour déchiffrer les données personnalisées chiffrées au moyen de la clé personnalisée.

5. Procédé selon la revendication 4, dans lequel, lorsque les données (30) de profil eSIM ont été reçues par le second dispositif (D2) de communication sans fil et qu'un utilisateur (N) ne souhaite pas que les données confidentielles d'utilisateur (CD1...CDn) se trouvent sur le second dispositif (D2) de communication sans fil, les données confidentielles d'utilisateur (CD1...CDn) sont supprimées du second dispositif (D2) de communication sans fil.

6. Procédé selon l'une quelconque des revendications précédentes, les données (30) de profil eSIM étant en outre stockées sur un serveur (40).

7. Procédé selon la revendication 4 ou 5, dans lequel le matériau (10) de création de clé et les clés (20) de chiffrement de profil étant générés de manière éphémère.

8. Procédé selon l'une quelconque des revendications précédentes, au moins un seul profil eSIM (30) étant transféré du premier dispositif (D1) de communication sans fil au second dispositif (D2) de communication sans fil.

9. Procédé selon l'une quelconque des revendications précédentes, dans lequel à l'étape a., les données chiffrées (30) de profil eSIM ont en outre été protégées par MAC.

10. Procédé selon l'une quelconque des revendications 1 à 8, dans lequel à l'étape a., les données chiffrées (30) de profil eSIM ont, en variante, été protégées par MAC.

11. Dispositif (D1, D2) de communication sans fil, configuré pour réaliser le procédé selon l'une quelconque des revendications précédentes.

12. Système (400) comprenant un premier dispositif (D1) de communication sans fil et un second dispositif (D2) de communication sans fil selon la revendication 11.
